(19) **Europäisches Patentamt**

**European Patent Office**

**Office européen des brevets**

(11) **EP 0 790 542 B1**

(12) **EUROPEAN PATENT SPECIFICATION**

(45) Date of publication and mention
of the grant of the patent:
**19.01.2000 Bulletin 2000/03**

(51) Int Cl.⁷: **G05D 1/08**

(21) Application number: **96112974.9**

(22) Date of filing: **12.08.1996**

(54) **Method for controlling the attitude of a three-axis stabilized, earth oriented bias momentum spacecraft**

Verfahren zur Lageregelung eines dreiachsenstabilisierten, erdorientierten trägheitsmomentstabilisierten Raumfahrzeuges

Procédé de contrôle d'attitude pour engin spacial orienté vers la terre, stabilisé sur trois axes, à moments d'inertie

(84) Designated Contracting States:
**DE FR GB IT**

(30) Priority: **11.08.1995 EP 95112723**

(43) Date of publication of application:
**20.08.1997 Bulletin 1997/34**

(73) Proprietor: **DaimlerChrysler AG**
**70567 Stuttgart (DE)**

(72) Inventors:
• **Surauer, Michael Dipl.Ing.**
**D-83339 Chieming (DE)**

• **Fichter, Walter Dipl.Ing.**
**D-81371 Münich (DE)**
• **Brüderle, Ernst Dipl.-Math.**
**D-85521 Ottobrunn (DE)**
• **Zentgraf, Peter Dr.**
**D-81541 München (DE)**

(56) References cited:
**EP-A- 0 453 096** **US-A- 5 205 518**

• **LEBSOCK K L: "HIGH POINTING ACCURACY WITH A MOMENTUM BIAS ATTITUDE CONTROL SYSTEM" AIAA COMMUNICATIONS SATELLITE SYSTEMS CONFERENCE, vol. 78-569, 1978, pages 269-277, XP000650355**

EP 0 790 542 B1

**Description**

The invention is related to a method and a device for controlling the attitude of a three-axis stabilized, earth oriented bias momentum spacecraft.

In general, in order to control the attitude of an three-axis stabilized, earth oriented spacecrafts, zero momentum systems and bias momentum systems are used.

In zero momentum systems the resulting angular momentum of the reaction wheels is zero. The reaction wheels are only used for controlling the spacecraft.

Zero momentum systems are typically used where a continous three axis measurement is available. These systems can be used for large angles of spacecraft rotations without any nutation coupling from the angular momentum wheels for controlling the spacecraft.

In opposite thereto, a bias momentum system has a defined resulting angular momentum caused by the reaction wheels, typically perpendicular to the orbit plane. Bias momentum systems have the advantage that a three-axis-stabilisation can be achieved by two-axis earth sensor measurement instead of a three-axis measurement. For these systems an appropriate control law is required. The disadvantage of these systems is a resulting moment of the roll-yaw-motions of the spacecraft (nutation). A further general advantage of the bias momentum spacecraft is the passive stability in emergency cases as consequence of sensor or actuator failures.

From the document D1 a zero momentum based gyroless yaw control system for a three axis stabilized spacecraft is known. As shown in fig. 6 of the document D1 the yaw estimation is based on a linearized estimation of the roll/yaw-kinematics (left section of the block diagram of fig. 6) and on the basis of a zero momentum spacecraft dynamics (right section of the block diagram of fig. 6). Because linearized equations are used for defining the rate around x- and y-axis, the system shown in fig. 6 of D1 is only usable for small inertial yaw angles in order to compensate for yaw-angles. For large inertial yaw areas the system of D1 is not stable because of the linearized approximation of the spacecraft kinematics. Another disadvantage of the system of the D1 document is that it is very sensitive in relation to the orbital rate and the spacecraft moment-of-inertia-tensor. If the orbital rate $\omega_0$ is small, for example in the case of a geo-stationary orbit, the yaw angle is practically not observable. In this case, the kinematic coupling between roll and yaw movements becomes neglectable small. The same effect occurs in the case of a symmetrical spacecraft, where $I_z$-$I_y$ and $I_z$-$I_x$ is very small (see middle section of the block diagram of fig.6, blocks 648 and 650). In the case letter mentioned the dynamical coupling between roll and yaw of the spacecraft goes to zero.

Further, inertial bias momentum systems or spacecrafts are used. The effect of using a bias momentum spacecraft is that the yaw angle and/or the derivation thereof is observable independent of the kinematics of the spacecraft and of the spacecraft moment of inertia parameters. Therefore, a spacecraft with symmetrical form can be controlled in all three axis by a bias momentum system. A further advantage of a bias momentum system is that it is passively stable which is important in emergency cases.

The problem of the bias momentum spacecrafts known from the state of the art are that they are not able to perform a tracking of targets over large angles.

One advantage of the invention is that the spacecraft can be automatically oriented to a moving target for example a target on earth while the spacecraft itself is moving along on its orbit around the earth. This effect is achieved by using a controller performing a partial decoupling between the three axis, in order to ensure yaw observablility. The controller according to the invention comprises a decoupling controller (see chapter 3. 1, page 12 of the description) and a tracking controller (see chapter 3.2 of page 13 of the description). The decoupling controller decouples the three axis partially in order to achieve compensation of the rotation. The yaw tracking is performed in the lower part of the block diagram of fig. 6 of the description especially by the blocks ,,pseudo-measurement of φ" and ,,time-variant yaw observer" (Equations 3.4, 3.5 of the description, page 13). Yaw tracking is performed on the basis of an estimated yaw signal and/or the derivative thereof because of the decoupling of roll and pitch movement on the one side and yaw movement on the other side. Therefore the yaw tracking can be performed independently of controlling the roll and pitch movements. Consequently, the system of the invention with the decoupling controller can be controlled like a zero momentum system, but having all advantages of a bias momentum system like the requirement of a three-axis-controll with only two-axis measurement in roll and pitch and yaw estimation or observability and the passive stability of the spacecraft around the angular momentum axis.

The object of the invention is to provide a method and a device which allows the controlling of the attitude of a three-axis-stabilized, earth oriented bias momentum spacecraft over a wide ranch of time-varying angles without using external talks and having a minimum effort of sensor equipment.

Brief description of the drawings:

Fig. 1      a view of the orientation of the orbit and reference coordinate systems

Fig. 4.1      a functional presentation of a roll-tracking maneuver wherein the roll-reference $\alpha$ and the controlled roll attitude $\Phi$ are shown in dependency of time (msec),

Fig. 4.2      shows the time history of attitude control errors in roll, pitch and yaw of the roll-tracking maneuver of Fig. 4.1,

Fig. 4.3      shows the wheel angular momentum during the roll-tracking maneuver of Fig. 4.1,

Fig. 4.4      shows the time history of the yaw-angle transient $\psi$ of a geo-stationary application of the system,

Fig. 4.5.      shows a block-diagram of the complete three-axis-controller of the invention, and

Fig. 4.6      shows a schematic presentation of the time-variant yaw observer as used in the system of Fig. 4.5.

With respect to formulas and equations used to describe the invention, the following notations and achronyms are used:

NOTATION

| | |
|---|---|
| $\underline{a}$ | vector $\underline{a}$ |
| $\underline{a}^T$ | transposed vector $\underline{a}$ |
| $\underline{\dot{a}}$ | derivative of $\underline{a}$ with respect to time |
| $\tilde{a}$ | cross-product matrix of $\underline{a}$ |
| $\underline{a}_M$ | measurement of $\underline{a}$ |
| A | matrix A |
| $T_a{}^b$ | transforming matrix from system a to b |
| E | identity matrix |
| $\underline{\omega}^a$ | rate, expressed in system a |
| $\underline{\omega}$ | rate without superscript: expressed in body system |
| c,s | cosine, sine |

ACHRONYMS

LEO   low earth orbit
GEO   geostationary earth orbit

TECHNICAL BACKGROUND OF THE INVENTION

Earth oriented three axis stabilized satellites have generally no continous yaw attitude information available or even no yaw measurement at all. This is true especially for commercial communication satellites which have to be designed under stringent economic conditions. The common approach to achieve 3-axis stabilization with a 2-axis attitude sensor only (earth sensor) is to establish a bias momentum perpendicular to the orbit plane which leads to observability of the yaw motion by the roll measurement. An early publication in this field is e.g. [DoSR68], which is well-known as the "Whecon"-principle.

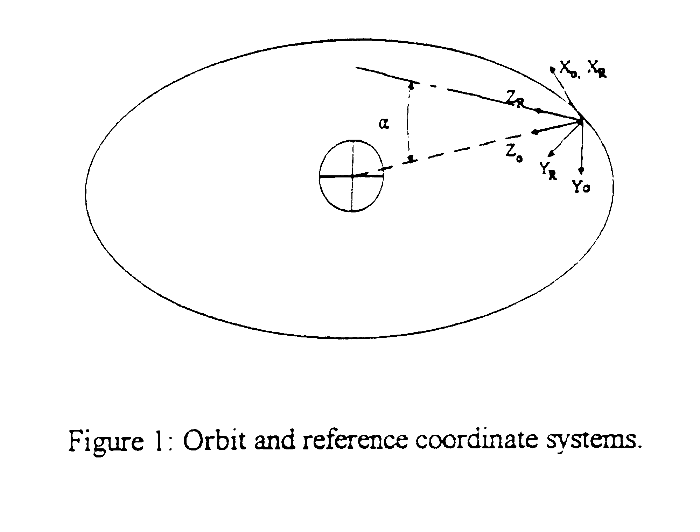

In more detail, the invention relates to a control design approach for a generalized eartn pointing control mode with 2-axis earth sensor measurements only and bias momentum coupling, where time varying attitude reference signals with respect to an earth pointing reference frame are considered. This means, the control task here tackles a tracking problem in addition to a disturbance rejection problem. A possible control task is shown in figure 1. The desired spacecraft attitude, here a roll-bias angle $\alpha$ and zero pitch- and yaw angles, can be expressed as a time varying reference attitude with respect to the orbital earth pointing reference frame $(X_0, Y_0, Z_0)$. Furthermore, roll-tracking is necessary in case of inclined orbit operations of geosynchronous satellites, where proper earth orientation for yantenna pointing purposes has to be maintained.

Another example are small satellites in low Earth orbits, that use -besides the solar array rotation- one degree of freedom around the satellite yaw axis for the optimal orientation of the solar panels, i.e. to assure that the sun vector is always (nearly) perpendicular to the panel surface.

The subsequent explanations cover as far as possible a general case. Examples are given for the above mentioned application of roll tracking operations.

The minimum sensor and actuator hardware configuration which is necessary for the realization of this attitude control approach consists of the following components:

   a.) A set of wheels that span the 3-dimensional space, i.e. practically linear actuators which produce torques around the 3 spacecraft axes. Usually 4 wheels are used for redundancy.

   b.) An Earth sensor that delivers a 2-axis attitude information around the roll-and pitch axis.

Additionally, an actual spacecraft has to be equipped with actuators for angular momentum control, such as magnetic torquers, thrusters, and/or solar array drives for solar torque compensation, depending on the spacecraft mission.

The remainder of this paper deals with the attitude control.

2. SPACECRAFT DYNAMICS AND KINEMATICS

In this section the system equations describing the spacecraft dynamics and kinematics are presented.

*2.1 Transformations between involved coordinate systems*

*Transformation from orbit system to reference system.* The spacecraft is rotated from the orbit system by time-varying bias Euler-angles $\gamma(t)$ about the yaw-axis, $\beta(t)$ about the pitch-axis and $\alpha(t)$ about the roll-axis with corresponding transformation matrices $T_\alpha$, $T_\beta$, $T_\gamma$ :

$$T_\alpha = \begin{bmatrix} 1 & 0 & 0 \\ 0 & c\alpha & s\alpha \\ 0 & -s\alpha & c\alpha \end{bmatrix} ; \quad T_\beta = \begin{bmatrix} c\beta & 0 & -s\beta \\ 0 & 1 & 0 \\ s\beta & 0 & c\beta \end{bmatrix} ;$$

$$T_\gamma = \begin{bmatrix} c\gamma & s\gamma & 0 \\ -s\gamma & c\gamma & 0 \\ 0 & 0 & 1 \end{bmatrix} . \qquad (2.1\,a;b;c)$$

Applying the rotation in this order yields the transformation matrix from orbit to reference system

$$T_O^R = T_\alpha \, T_\beta \, T_\gamma =$$

$$\begin{bmatrix} c\beta c\gamma & c\beta s\gamma & -s\beta \\ s\alpha s\beta c\gamma - c\alpha s\gamma & s\alpha s\beta s\gamma + c\alpha c\gamma & s\alpha c\beta \\ c\alpha s\beta c\gamma + s\alpha s\gamma & c\alpha s\gamma s\beta - s\alpha c\gamma & c\alpha c\beta \end{bmatrix} \qquad (2.2)$$

with column vectors

$$T_O^R = [\underline{t}_1 \ \underline{t}_2 \ \underline{t}_3] \ . \tag{2.3}$$

*Transformation from reference system to body system.* The satellite is deviated from its reference attitude by the Euler-angles $\underline{\varphi} = [\, \phi \ \theta \ \psi \,]^T$, which the controller tries to suppress in the presence of disturbances. For small Euler-angles the transformation matrix from reference system to body system can be linearized to give

$$T_R^B = E - \tilde{\underline{\varphi}}. \qquad (2.4)$$

*2.2 Kinematics*

The dynamical behaviour of the spacecraft has to be described in terms of Euler-angles. Therefore, the body angular velocity and the body angular acceleration appearing in the angular momentum equation need to be expressed by the Euler-angles. The absolute body angular velocity of the spacecraft $\underline{\omega}$ expressed in body system can be split into three parts:

$$\underline{\omega} = \underline{\omega}_0 + \underline{\omega}_R + \dot{\underline{\varphi}} \, , \tag{2.5}$$

where $\underline{\omega}_0$ is the orbit angular velocity of the orbit system relative to the inertial system, $\underline{\omega}_R$ is the reference angular velocity of the reference system relative to the orbit system and $\dot{\underline{\varphi}}$ describes the body angular velocity relative to the reference system.

*Orbit angular velocity $\underline{\omega}_0$.* The orbit angular velocity expressed in the reference system is $\underline{\omega}_0{}^R = [0 \ -\omega_O \ 0]^T$ and can be expressed in the body system applying two subsequent transformations:

$$\underline{\omega}_0 = T_R^B \, T_O^R \, \underline{\omega}_0^R = -(E - \tilde{\underline{\varphi}}) \, \underline{t}_2 \omega_0. \qquad (2.6)$$

*Reference angular velocity $\underline{\omega}_R$.* Defining the vectors

$$\underline{\alpha} = \begin{bmatrix} \alpha \\ 0 \\ 0 \end{bmatrix} \quad \underline{\beta} = \begin{bmatrix} 0 \\ \beta \\ 0 \end{bmatrix} \quad \underline{\gamma} = \begin{bmatrix} 0 \\ 0 \\ \gamma \end{bmatrix} \quad , \quad (2.7a;b;c)$$

$\underline{\omega}_R$ can be written as

$$\underline{\omega}_R = T_R^B \underline{\omega}_R^R = [E - \tilde{\underline{\varphi}}] \underline{\omega}_R^R \qquad (2.8)$$

with

$$\underline{\omega}_R^R = \dot{\underline{\alpha}} + T_\alpha \dot{\underline{\beta}} + T_\alpha T_\beta \dot{\underline{\gamma}}. \qquad (2.9)$$

*2.3 Expressing the Euler equation in terms of measured roll and pitch angles*

The well known Euler equation describing the behaviour of a rigid body tumbling lonely in space [Wit77] is

$$I\dot{\underline{\omega}} + \tilde{\underline{\omega}} I \underline{\omega} + \tilde{\underline{\omega}} \ \underline{h} = -\dot{\underline{h}} + \underline{T}_C + \underline{T}_D, \qquad (2.10)$$

where the variables in eq. (2.9) have the following meaning:

I - inertia matrix w.r.t. principal axes
$\underline{h}$ - angular momentum of wheels
$\underline{T}_C$ - external control torque
$\underline{T}_D$ - external disturbance torque .

In the next section a control law is developed which linearizes the Euler equation. However, it is assumed, that only roll- and pitch-angles are known by measurement. Because these signals will be used for the control law the Euler equation (2.10) is rewritten in terms of the new measurement vector $\underline{\varphi}_M = [\phi \ \theta \ 0]^T$. Therefore, the spacecraft angular velocity vector $\underline{\omega}$ in eq. (2.5) is only partially known and it is replaced by $\underline{\omega}_M$:

$$\underline{\omega}_M = \underline{\omega}_{OM} + \underline{\omega}_{RM} + \dot{\underline{\varphi}}_M . \qquad (2.11)$$

The measured part of the orbit angular velocity $\underline{\omega}_{0M}$ is obtained by replacing $\underline{\varphi}$ in eq. (2.6) by $\underline{\varphi}_M$ :

$$\underline{\omega}_{0M} = -(E - \tilde{\underline{\varphi}}_M) \underline{l}_2 \omega_0. \qquad (2.12)$$

Defining the vector $\psi = [ \ 0 \ 0 \ \psi \ ]^T$, adding of

$$\Delta \underline{\omega}_0 = \tilde{\underline{\psi}} \underline{l}_2 \omega_0 \qquad (2.13)$$

recovers $\underline{\omega}_0$. Similarly, $\underline{\omega}_{RM}$ is obtained by replacing $\underline{\varphi}$ in eq. (2.8) by $\underline{\varphi}_M$,

$$\underline{\omega}_{RM} = (E - \tilde{\underline{\varphi}}_M)\underline{\omega}_R^R \ , \qquad (2.14)$$

and adding of

$$\Delta\underline{\omega}_R = -\underline{\tilde{\Psi}} \ \underline{\omega}_R^R \qquad (2.15)$$

recovers $\underline{\omega}_R$.

The spacecraft angular velocity vector $\underline{\omega}$ can be written as

$$\underline{\omega} = \underline{\omega}_M + \Delta\underline{\omega} \qquad (2.16)$$

with

$$\Delta\underline{\omega} = \underline{\dot{\psi}} + \Delta\underline{\omega}_0 + \Delta\underline{\omega}_R \qquad (2.17)$$

yielding the spacecraft angular acceleration

$$\underline{\dot{\omega}} = \underline{\dot{\omega}}_M + \Delta\underline{\dot{\omega}} \ . \qquad (2.18)$$

The measured spacecraft angular acceleration $\underline{\dot{\omega}}_M$ is futher split into

$$\underline{\dot{\omega}}_M = \underline{\dot{\omega}}_{CM} + \tilde{\underline{\dot{\varphi}}}_M \qquad (2.19)$$

with

$$\underline{\dot{\omega}}_{CM} = \underline{\dot{\omega}}_{0M} + \underline{\dot{\omega}}_{RM} \ , \qquad (2.20)$$

because the signal $\underline{\dot{\omega}}_{CM}$ rather than $\underline{\dot{\omega}}_M$ is decoupled in order to leave terms of $\phi$ and $\theta$ in the system equation. Before eqs. (2.16, 2.18, 2.19) are inserted into Euler equation (2.10), the second term in eq. (2.10) is simplified: Inserting eq. (2.16) in this term gives

$$\tilde{\underline{\omega}}I\underline{\omega} = (\tilde{\underline{\omega}}_M + \Delta\tilde{\underline{\omega}}_M)I(\underline{\omega}_M + \Delta\underline{\omega}_M)$$

$$\approx \tilde{\underline{\omega}}_M I \tilde{\underline{\omega}}_M + (\tilde{\underline{\omega}}_M I - \widetilde{I\underline{\omega}}_M)\Delta\underline{\omega}. \qquad (2.21)$$

Inserting eqs. (2.16, 2.18, 2.19, 2.21) in eq.(2.10) gives after rearranging terms

$$I\dot{\underline{\omega}}_{CM} + \tilde{\underline{\omega}}_M \, I\underline{\omega}_M + \tilde{\underline{\omega}}_M \underline{h} +$$

$$I\dot{\underline{\varphi}}_M + I\Delta\dot{\underline{\omega}} + [\tilde{\underline{\omega}}_M I - \widetilde{I\underline{\omega}_M} - \tilde{\underline{h}}]\Delta\underline{\omega} =$$

$$-\dot{\underline{h}} + \underline{T}_C + \underline{T}_D. \qquad\qquad (2.22)$$

## 3. DECOUPLING AND TRACKING CONTROL

In this section a wheel control torque is developed to satisfy two design objects: First, to decouple yaw-dynamic from roll- and pitch-dynamic and second, to enable tracking of arbitrary bias angles $\alpha(t)$, $\beta(t)$ and $\gamma(t)$. The wheel torque is decomposed in

$$-\dot{\underline{h}} = -\dot{\underline{h}}_D - \dot{\underline{h}}_C , \qquad\qquad (3.1)$$

where $\dot{\underline{h}}_D$ is the decoupling and $\underline{h}_C$ is the tracking control part.

*3.1 Decoupling control law*

In the reformulated Euler equation (2.22) the measurable terms except the term "$I\ddot{\underline{\varphi}}_M$" are put into $-\dot{\underline{h}}_D$ , i.e.

$$-\dot{\underline{h}}_D = I \, \dot{\underline{\omega}}_{CM} + \tilde{\underline{\omega}}_M I\underline{\omega}_M + \tilde{\underline{\omega}}_M \underline{h}. \qquad\qquad (3.2)$$

Inserting eq. (3.2) in eq. (2.22) results in the decoupled system equation

$$I\ddot{\underline{\varphi}} + [\tilde{\underline{\omega}}_M I - \widetilde{I\underline{\omega}_M} - \tilde{\underline{h}} - I\tilde{\underline{i}}_2\omega_0 + I\tilde{\underline{\omega}}_R^R]\dot{\underline{\psi}} +$$

$$[(\tilde{\underline{\omega}}_M I - \widetilde{I\underline{\omega}_M} - \tilde{\underline{h}})(-\tilde{\underline{i}}_2\omega_0 + \tilde{\underline{\omega}}_R^R) - I\dot{\tilde{\underline{i}}}_2\omega_0 + I\dot{\tilde{\underline{\omega}}}_R^R]\underline{\psi} =$$

$$-\dot{\underline{h}}_C + T_C + T_D \qquad\qquad (3.3)$$

Because of eq. (2.19) the matrices in brackets in eq. (3.3) still contain Euler-angles $\phi$ and $\theta$ . Here, they can be neglected, because they are subsequently multiplied with $\psi$ and $\dot{\psi}$, respectively, resulting in "small" products which can be neglected. It remains only a one-way-directed coupling between roll/pitch-dynamics and roll-dynamics: yaw couples in roll/pitch but not vice versa.

*3.2 Tracking control and yaw estimation*

Equation (3.3) that describes the already partially decoupled plant dynamics w.r.t. the reference attitude will now be divided into two subsystems according to the roll/pitch motion and the yaw motion. Remembering that the first two components of $\underline{\psi}$ are zero, eq. (3.3) can formally be rewritten as

$$\begin{pmatrix} \bar{\phi} \\ \bar{\theta} \end{pmatrix} + \underline{c}_1(t)\psi + \underline{d}_1(t)\psi = -\dot{\underline{h}}_{c1}^* + \underline{T}_{c1}^* + \underline{T}_{d1}^* \qquad (3.4)$$

$$\ddot{\psi} + c_2(t)\dot{\psi} + d_2(t)\psi = -\dot{h}_{c2}^* + T_{c2}^* + T_{d2}^* \qquad (3.5)$$

where $\underline{c}_1$ (t), $\underline{d}_1$ (t) are (2x1)vectors, $c_2$ (t), $d_2$ (t)are scalars; the "*"-superscript indicates, that the torques on the right side of eqs. (3.4, 3.5) are normalized w.r.t. the diagonal elements of I. For a properly established bias momentum along the orbit normal, evaluation of these coefficients shows the following properties:

(i.) $d_2(t)$ and $|\underline{c}_1(t)|$ have a dominating bias. This means that at least one component of $\underline{c}_1(t)$ is relatively large. Comparison: For an Earth pointing geostationary satellite is $\underline{c}_1 = [h_y \ 0]^T$ and $d_2 = \omega_0 h_y$, see [DoSR68].

(ii.) $|\underline{d}_1(t)|$ is relatively small. For the geostationary case is $d_1 = [0 \ 0]^T$.

(iii.) $c_2(t)=0$. This reflects the fact that a bias momentum satellite is a gyroscopic system, i.e. there is no dissipative damping.

Eqs. (3.4, 3.5) demonstrate that yaw-dynamic couples in roll/pitch-dyamic but not vice versa.

*Axis related controllers.* The roll/pitch subsystem is controlled by a standard PID control law

$$-\dot{\underline{h}}_{c1} = -K_P \begin{pmatrix} \phi \\ \theta \end{pmatrix} - K_D \begin{pmatrix} \dot{\phi} \\ \dot{\theta} \end{pmatrix} - K_I \int \begin{pmatrix} \phi \\ \theta \end{pmatrix} dt \qquad (3.6)$$

using the measurements of the Earth sensor. Roll and pitch angle derivatives are obtained by numerical differentiation (filtering). $K_P$, $K_D$, $K_I$ are diagonal (2x2) gain matrices. Remember that $\phi$ and $\theta$ are the deviations from the time varying reference attitude system.

The yaw-axis is controlled by a PD control law

$$-\dot{h}_{c2} = -k_P \psi - k_D \dot{\psi} \qquad (3.7)$$

where $k_D$, $k_P$ are scalar gains and $\psi$, $\dot{\psi}$ are estimates of the yaw state w.r.t. the reference yaw attitude. They are provided by the yaw observer which is discussed subsequently.

*Yaw observer.* Basically, the yaw state estimates are obtained by a reduced order observer. Although there are standard design procedures -at least for time invariant systems- the subsequent explanations are based on an "engineering approach" rather than a strict mathematical approach, because it considers a feel for the physics of bias momentum satellites and it is very similar for both cases, time-varying and -invariant reference attitude.

For simplicity $\underline{T}_C$, $\underline{T}_D$, and $K_I$ are assumed to be zero for the time being. With properties (i.), (ii.), and eq. (3.6), eq. (3.4) can be rewritten as

$$\underline{c}_1(t) \; \dot{\psi} = -\left( \begin{pmatrix} \bar{\dot{\phi}} \\ \bar{\dot{\theta}} \end{pmatrix} + K_D \begin{pmatrix} \dot{\phi} \\ \dot{\theta} \end{pmatrix} + K_P \begin{pmatrix} \phi \\ \theta \end{pmatrix} \right). \qquad (3.8)$$

Then Laplace transformation of eq. (3.8) for a particular time instant $t_0$ yields

$$\begin{pmatrix} \phi \\ \theta \end{pmatrix} = -(Es^2 + K_D s + K_P)^{-1} \; \underline{c}_1(t_0) \; \dot{\psi}, \qquad (3.9)$$

i.e. $(\phi \; \theta)$ can be regarded as a (delayed) measurement of $\dot{\psi}$, scaled by $\underline{c}_1(t)$. In order to obtain a pseudo-measurement $\dot{\psi}_m$, eq. (3.9) is multiplied by a vector $\underline{w}=[w_1 \; w_2]^T$ leading to

$$\dot{\psi}_m = \underline{w}^T \begin{pmatrix} \phi \\ \theta \end{pmatrix}$$

$$= -\underline{w}^T(t_0)(Es^2 + K_D s + K_P)^{-1} \underline{c}_1(t_0)\dot{\psi} . \qquad (3.10)$$

The vector $\underline{w}$ can be chosen in such a way, that the steady state transfer function in eq. (3.10) from $\dot{\psi}$ to $\dot{\psi}_m$ equals one, i.e.

$$\underline{w} = -\frac{K_P^{-1} \underline{c}_1}{\left| K_P^{-1} \underline{c}_1 \right|^2} . \qquad (3.11)$$

Because of property (i.) and the diagonality-property of $K_P$ the numerator in eq. (3.11) is nonzero, and in all cases a vector $\underline{w}$ can be computed according to eq. (3.11).

Another possibility to generate $\dot{\psi}_m$ is to switch between the first and second row of eqs. (3.9) and (3.10), respectively, depending on the components of $\underline{c}_1$. In this case the corresponding components of $\underline{w}$ have to be zero.

If the second derivative of $[\phi \; \theta]^T$ in eq. (3.8) is neglected, then even an unfiltered pseudo-measurement $\dot{\psi}_m$ is availabe, because the roll and pitch angles and its derivatives are known. Experience shows, that this is possible for many applications.

Now $\dot{\psi}_m$ can be used to design a standard observer for the yaw angle $\psi$ based on the plant model eq. (3.5), which is decoupled from the roll/pitch subsystem. Observability can be verified using property (i.).

In case of nonzero external torques $\underline{T}_C$, $\underline{T}_D$, the known contributions can be considered in eq. (3.10), the unknown contributions result in errors of the pseudo-measurement $\dot{\psi}_m$. For nonzero $K_I$, the integrals of the roll- and pitch angle have to be used for measurement purposes instead of the attitude angles.

*Stability Analysis*. Due to the periodic variation of the parameters of the plant dynamics (3.4), (3.5), the closed loop stability analysis can be performed by means of Floquet theory, see e.g. [Vid93].

As already mentioned there is provided a three axis wheel torque capability and a wheel configuration which can establish a wheel angular momentum vector in any desired direction so that also any change of this direction becomes possible. The torque command vector to the wheels is

$$\underline{T}_{CW} = -\underline{h} = -\underline{h}_D - \underline{h}_C \, , \, \underline{h}_C = \underline{h}_{C1} + \underline{h}_{C2}.$$

There is performed a transformation of the open loop spacecraft dynamics given by the Euler equation (2.10) by means of a transformation or decoupling controller. This first feed back control loop leads to a "new spacecraft dynamics" given in equations (3.4) and 3.5) having a two-dimensional part (3.4) coupling the non measurable yaw component $\psi$ to the measurable roll and pitch components $\phi$ and $\theta$, respectively.

The transformation controller generates a first torque command or control signal (3.2) $-\underline{h}_D = \underline{T}_{CWD}$ for the wheels and uses as inputs the measurable parts $\underline{\omega}_M$ of the spacecraft angular velocity vector $\underline{\omega}$ and $\underline{\omega}_{CM}$ of the spacecraft angular acceleration vector, the measured angular moment vector $\underline{h}$ of the wheels and the inertia matrix I of the spacecraft.

The essential feature of this approach is the artificial decoupling of roll-pitch dynamics from the yaw dynamics but not vice versa, see equations (3.4) and (3.5). Considering that $c_2(t)$ and $d_1(t)$ can be neglected, see (iii), these equations then take the form:

$$\begin{bmatrix} \ddot{\phi} \\ \ddot{\theta} \end{bmatrix} + \underline{c}_1(t)\dot{\psi} = -\underline{h}^*{}_{c1} + \underline{T}^*{}_{c1} + \underline{T}^*{}_{d1} \tag{3.12}$$

$$\ddot{\psi} + d_2(t)\psi = -\underline{h}^*{}_{c2} + \underline{T}^*{}_{c2} + \underline{T}^*{}_{d2} \tag{3.13}$$

Due to the fact that $\varphi$ can be measured, a standard PID controller is used, see equation (3.6) for roll and pitch control. Equation (3.13) shows that only a feed back D control law $-k_D\psi$ is needed to stabilize the yaw control loop if $d_2(t) > 0$. This can be ensured by proper selection of the size of the wheel angular momentum vector. A disadvantage of this approach is that one can only vary the damping of the yaw closed loop. Therefore a PD control law gives the possibility to optimize the yaw control loop w. r. t. damping and bandwidth.

Equation (3.10) shows one of the possibilities to generate a pseudo measurement of the yaw rate $\dot{\psi}_m$. In case that for the yaw closed loop dynamics only D control is sufficient, the control law is given by

$$- \dot{h}_{c2} = - K_D \dot{\psi}_m \tag{3.14}$$

In case an improved yaw closed loop performance it needed, a standard observer approach for the yaw axis can be chosen. $\psi_m$ is then input to a time variant Luenenberg type yaw observer, the yaw control law for this approach being

$$- \dot{h}_{c2} = - K_D \dot{\hat{\psi}} - K_p \hat{\psi}$$

with the estimated value $\hat{\psi}$ for the yaw variable $\psi$.

The method of the invention can be applied in generalized roll, pitch and yaw tracking on the basis of only two-axis attitude measurements, for example for roll-pitch tracking in the case of inclined orbit operation or for yaw tracking in the case of yaw steering operation.

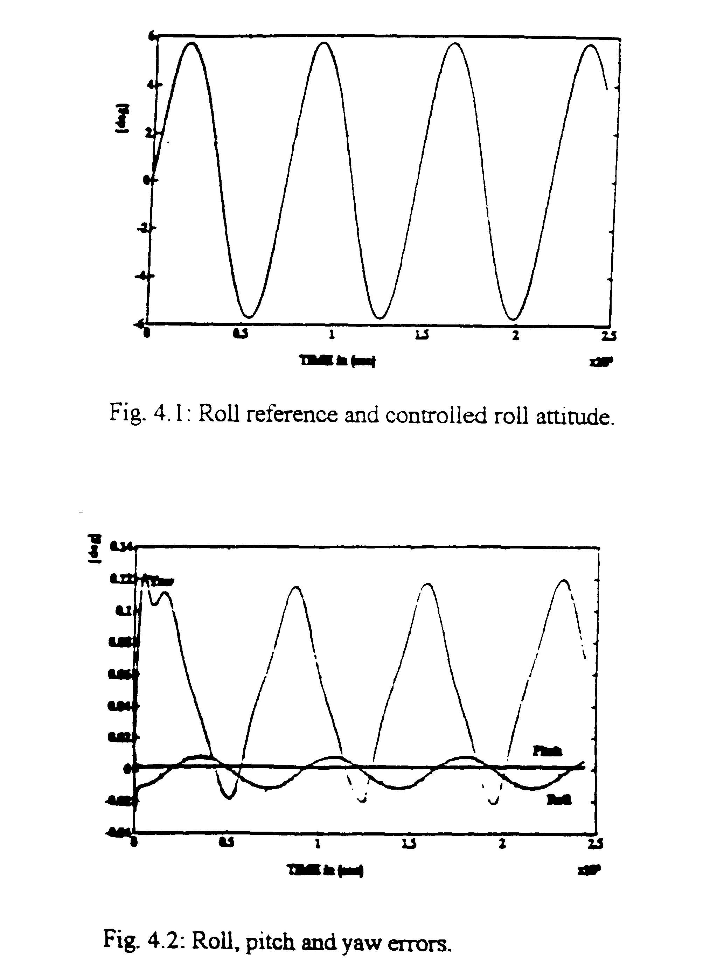

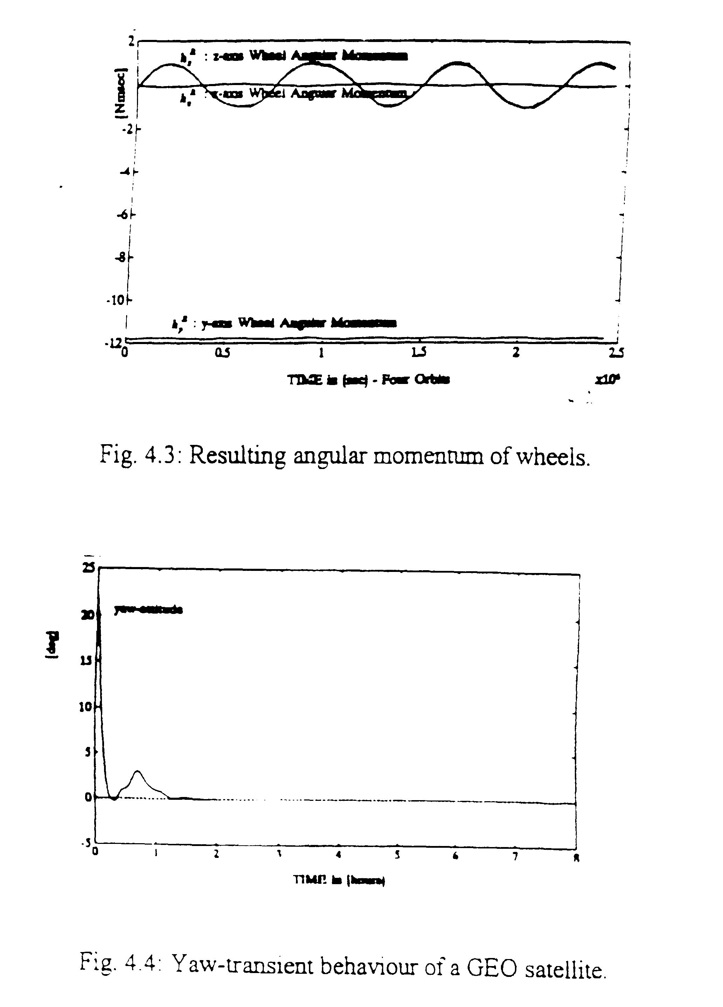

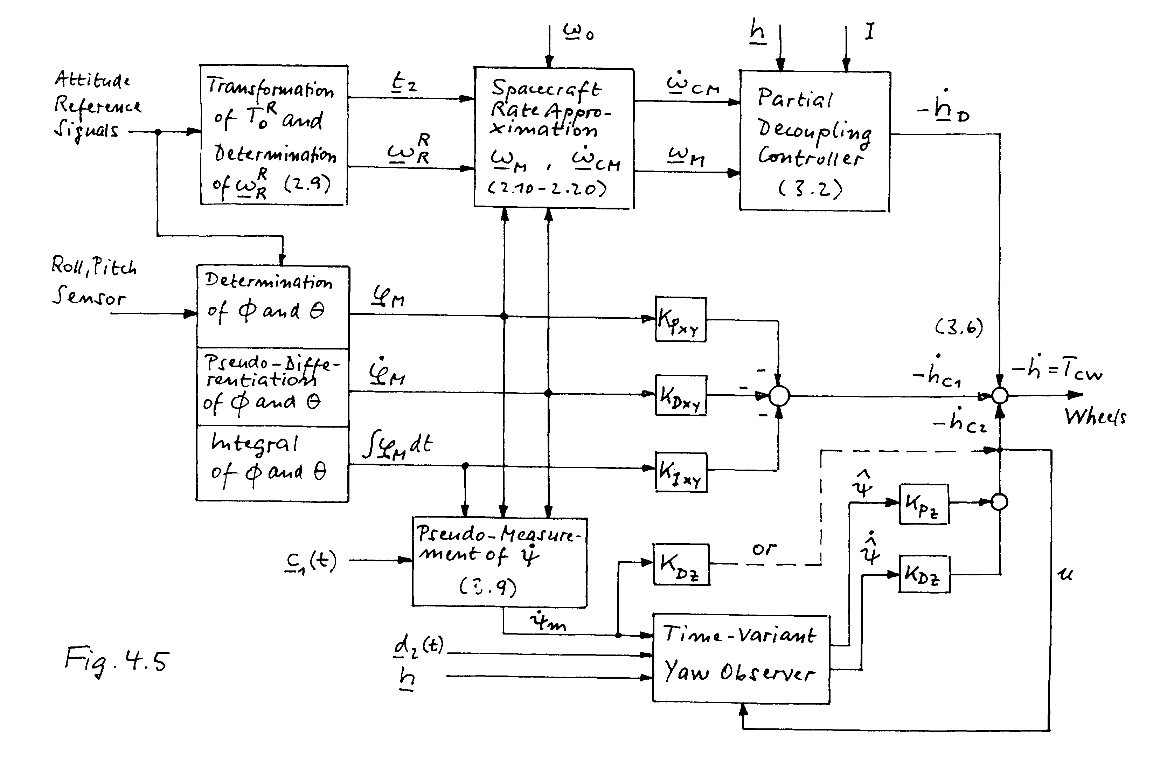

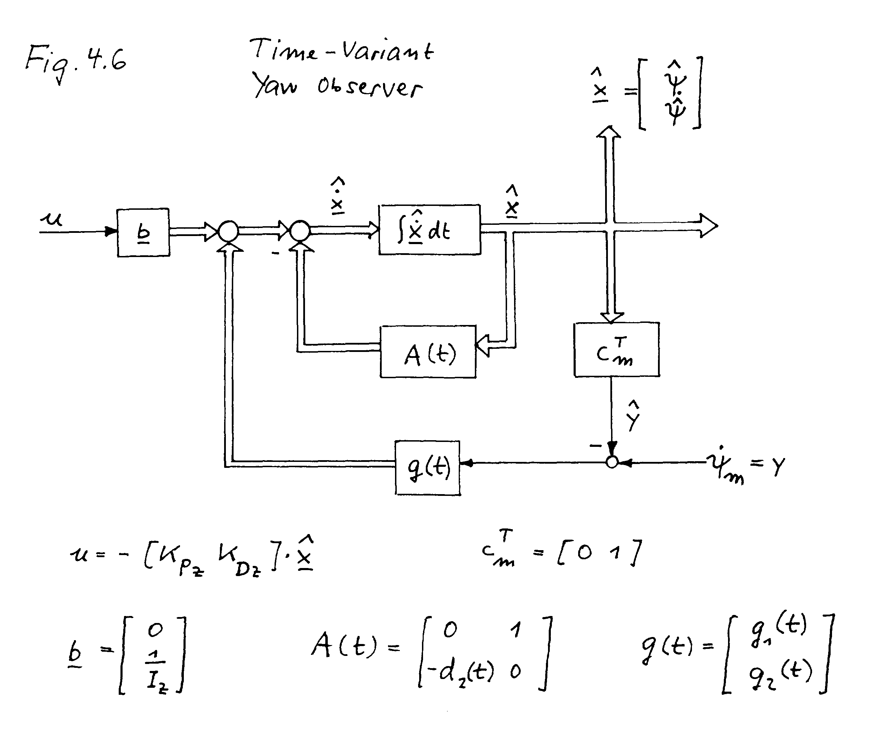

In figure 4.5 there is shown a block diagramm of the method of the invention, exhibiting the input variables and parameters for the signal processing and control device as well as the output control signal to be fed to the wheel configuration including signal flow within the device and references to the equations to be performed in the device components represented by the respective blocks. Fig. 4.6 shows the structure of the mentioned yaw observer.

## 4. SIMULATION RESULTS

The simulation assumptions and results are taken from [Sur95].

### 4.1 LEO-application

Some typical applications for LEO-control tasks are Earth pointing (i.e. pitch tracking), roll and yaw tracking. For the simulations the corresponding spacecraft parameters, disturbance torques and orbit parameters are listed below:

Inertia matrix I = diag {850, 200, 860} Nms$^2$.
Orbit frequency $\omega_0$ = 2$\pi$ / (7200 s).
Disturbance torque $\underline{T}_D = \underline{a}_0 + \underline{a}_1 \cos \omega_0 t + \underline{a}_0 \sin \omega_0 t$ with

$\underline{a}_0^T$ = [4 20 10] 10$^{-6}$ Nm
$\underline{a}_1^T$ = [-15 10 0] 10$^{-6}$ Nm
$\underline{a}_2^T$ = [0 10 15] 10$^{-6}$ Nm

Reference angular momentum $h_y^R$ = -12Nms.
IRES noise: 3$\sigma$ = 0.1 degree.

Angular momentum control is performed taking magneto torquers to generate external control torques. An example for a roll-tracking maneuver is shown in

Figs. 4.1., 4.2, 4.3.
Fig. 4.1 shows the roll-reference $\alpha$ and the controlled roll attitude $\phi$. With this ordinate scaling no difference between the two signals can be noticed.
In Fig. 4.2 the time history of attitude control errors in roll, pitch and yaw is plotted.
Fig. 4.3 shows the wheel angular momentum during the roll-tracking maneuver.

### 4.2 GEO-application

In order to demonstrate the benefits of the yaw observer derived in section 3.2 the transient behaviour of a GEO satellite with large initial yaw angle ($\psi_0$ = 25 deg.) is investigated. No disturbance torque is assumed. The orbit frequency is now $\omega_0$ = 2 $\pi$ / (24 h), the remaining data are the same as in section 4.1. The time history of $\psi$ is shown in Fig. 4.4.
Steady state conditions are reached after 2 hours, whereas a whecon controller needs 6 hours to reach steady state.

## 5. CONCLUSIONS

A control law for Earth oriented momentum bias satellites with time varying attitude reference signals was derived. Such reference signals have to be applied e.g. for roll tracking maneuvers. The corresponding minimum hardware configuration consists basically of a 2-axis Earth sensor, and wheels that provide a linear torque capability around all 3 spacecraft axes.
The control laws consist of a nonlinear decoupling part that leads to a linear, but time-varying plant dynamics, and axis related PID controllers for the control w.r.t. the reference attitude. The yaw state estimates are provided by an observer for the time-varying plant.
This approach has the advantage that it can be applied to a more general class of normal mode operations. It also resuits in an improved transient behaviour for nonzero initial conditions, without serious degradation of the disturbance rejection properties. This was demonstrated by simulation tune histories for a classical geostationary satellite in an equatorial orbit revealing fast transient behaviour and for a satellite in LEO performing roll tracking maneuvers.

## 6. REFERENCES

[DoSR68]   H.J. Dougherty, E. D. Scott, J.J.Rodden, Analysis and Design of Whecon - An Attitude Control Concept. AIAA-Paper No. 68-461.

[Sur92]    M. Surauer, Private communications, 1995.

[Vid93]    M. Vidyasagar, Nonlinear Systems Analysis. Prentice Hall, second edition, 1993.

[Wit77]    J. Wittenburg, Dynamics of Systems of Rigid Bodies. Teubner Verlag, Stuttgart, 1977.

**Claims**

1. Method for controlling the attitude of a three-axis-stabilized, earth oriented bias momentum spacecraft being supplied on its orbit with time varying attitude reference signals with respect to an orbital earth pointing reference coordinate system and having sensor means for two-axis attitude measurement and a set of wheels for establishing an angular momentum in any desired direction and for producing torques ($T_{CW}$) about the three axes of a spacecraft-related orthogonal coordinate system, the method comprising

   - feeding to a signal processing and control device said time varying attitude reference signals, measurement signals from said sensor means and signals ($\underline{h}$) representing the angular momentum vector of said set of wheels,

   - in said signal processing and control device generating first ($-\underline{\dot{h}}_D$), second ($-\underline{\dot{h}}_{C1}$) and third control signals ($-\underline{\dot{h}}_{C2}$), the sum of which being used as torque command vector ($-\underline{\dot{h}}$), for said set of wheels,

   - for the generation of said first control signal ($-\underline{\dot{h}}_D$)

      - starting from the Euler equation (2.10) describing the spacecraft dynamics,

      - transforming (2.11-2.20) the Euler equation by introducing the measurable parts $\underline{\omega}_M$ and $\underline{\dot{\omega}}_{CM}$ of the spacecraft angular velocity vector $\underline{\omega}$ and its derivative $\underline{\dot{\omega}}$, respectively as derived from $\underline{\varphi}_M \equiv [\phi \ \Theta \ 0]^T$, the measureable part of an Euler angle vector $\varphi \equiv [\phi \ \Theta \ \psi]^T$ representing the deviation (page 8, Chapter 2.3) of the spacecraft from its reference attitude, and

      - determining said first control signal ($-\underline{\dot{h}}_D$) as one part of the torque command vector ($-\underline{\dot{h}}=T_{CH}$) figuring in the Euler equation and being related to said set of wheels in such a way that said first control signal compensates all relevant terms in the Euler equation that are measurable by means of said sensormeans except for the term $I\underline{\dot{\varphi}}$ (equations 3.3), wherein I is the spacecraft inertia matrix, in order to decouple the spacecraft axis and to ensure a pseudo-measurement of the Euler-angle derivative $\dot{\psi}$ .

   - determining the sum of said second ($-\underline{\dot{h}}_{C1}$) and third control signals ($-\underline{\dot{h}}_{C2}$) as the other part of said torque command vector,

   - said second control signal ($-\underline{\dot{h}}_{C1}$) being generated by means of a PID or PD control law using the measurable components $\phi$, $\Theta$ of vector $\underline{\varphi}$ as control input, and

   - said third control ($-\underline{\dot{h}}_{C2}$) signal being generated by means of either a D control law using said pseudo-measurement derivative $\dot{\psi}$ as controller input or a PD control law using the computed $\dot{\psi}$ as input for a time varying observer and the estimated observer state variables as controller input.

2. Method for controlling the attitude of a three-axis stabilized, earth oriented bias momentum spacecraft according to claim 1, characterized in that

   - said first control signal being determined as the relevant part of a sum of terms being previously obtainable from a transformation of the Euler equation which describes the spacecraft dynamics, the transformation consisting in

      replacing the vectors $\underline{\omega}$ and $\underline{\dot{\omega}}$ representing the spacecraft angular velocity and its derivative with respect to time, respectively, by vector sums ($\underline{\omega}_M + \Delta\underline{\omega}$) and ($\underline{\dot{\omega}}_{CM} + \Delta\underline{\dot{\omega}}$), respectively, these vector sums containing parts $\underline{\omega}_M$ and $\underline{\dot{\omega}}_M$ which are determinable taking into account their dependency upon a two-axial measurement vector $\underline{\varphi}_M \equiv [\phi \ \Theta \ 0]^T$ being the measurable part of a vector $\underline{\varphi} \equiv [\phi \ \Theta \ \psi]^T$ representing the space-

craft's deviation from its reference attitude, upon the orbit angular velocity $\omega_o$ and upon said time varying reference signals, and parts $\Delta\underline{\omega}$ and $\Delta\underline{\dot{\omega}}$ which are not determinable because of the lacking information in yaw ($\psi$),

said sum of terms comprising all terms of the transformed Euler equation which are determinable in view of their dependency as characterized above, except for the term $I\underline{\ddot{\varphi}}$, I being the spacecraft inertia matrix,

3. Device for controlling the attitude of a three-axis-stabilized, earth oriented bias momentum spacecraft being supplied on its orbit using time varying attitude reference signals with respect to an orbital earth pointing reference coordinate system and having sensor means for two-axis attitude measurement and a set of wheels for establishing an angular momentum in any desired direction and for producing torques ($T_{CW}$) about the three axes of a spacecraft-related orthogonal coordinate system, the apparatus comprising

- a signal processing and control device having said time varying attitude reference signals, measurement signals from said sensor means and signals ($\underline{h}$) representing the angular momentum vector of said set of wheels as input signals,

- said signal processing and control device generating first($-\underline{\dot{h}}_D$), second ($-\underline{\dot{h}}_{C1}$) and third control signals ($-\underline{\dot{h}}_{C2}$), the sum of which being used as torque command vector ($-\underline{\dot{h}}$), for said set of wheels,

- wherein the generation of said first control signal ($-\underline{\dot{h}}_D$) is achieved by

  - transforming (2.11-2.20) the Euler equation by introducing the measurable parts $\underline{\omega}_M$ and $\underline{\dot{\omega}}_{CM}$ of the spacecraft angular velocity vector $\underline{\omega}$ and its derivative $\underline{\dot{\omega}}$, respectively as derived from $\underline{\varphi}_M \equiv [\phi\ \Theta\ 0]^T$, the measureable part of an Euler angle vector $\varphi \equiv [\phi\ \Theta\ \psi]^T$ representing the deviation (page 8, Chapter 2.3) of the spacecraft from its reference attitude, and

  - by determining said first control signal ($-\underline{\dot{h}}_D$) as one part of the torque command vector ($-\underline{\dot{h}}=T_{CH}$) figuring in the Euler equation and being related to said set of wheels in such a way that said first control signal compensates all relevant terms in the Euler equation that are measurable by means of said sensormeans except for the term $I\underline{\ddot{\varphi}}$ (equations 3.3), wherein I is the spacecraft inertia matrix, in order to decouple the spacecraft axis and to ensure a pseudo-measurement of the Euler-angle derivative $\dot{\psi}$ .

  - wherein the sum of said second ($-\underline{\dot{h}}_{C1}$) and third control signals ($-\underline{\dot{h}}_{C2}$) is forming the other part of said torque command vector,

- said second control signal ($-\underline{\dot{h}}_{C1}$) being generated by means of a PID or PD control law using the measurable components $\phi$, $\Theta$ of vector $\underline{\varphi}$ as control input, and

- said third control ($-\underline{\dot{h}}_{C2}$) signal being generated by means of either a D control law using said pseudo-measurement derivative $\dot{\psi}$ as controller input or a PD control law using the computed $\dot{\psi}$ as input for a time varying observer and the estimated observer state variables as controller input.

**Patentansprüche**

1. Verfahren zur Lageregelung eines dreiachsenstabilisierten, erdorientierten trägheitsmomentstabilisierten Raumfahrzeugs, welches auf seiner Umlaufbahn mit zeitveränderlichen Lagebezugssignalen mit Bezug auf ein erdgerichtetes Bezugskoordinatensystem versorgt wird und Sensormittel für zweiachsige Lagemessung und einen Satz Räder zum Aufbauen eines Winkelmoments in jeder gewünschten Richtung und zum Herstellen von Drehmomenten ($T_{CW}$) um die drei Achsen eines raumfahrzeugbezogenen orthogonalen Koordinatensystems aufweist, wobei das Verfahren umfaßt:

- Zuführen der zeitveränderlichen Lagebezugssignale, der Messungssignale der Sensormittel und der Signale ($\underline{h}$), welche den Winkelmomentvektor des Rädersatzes darstellen, zu einer Signalverarbeitungs- und Steuervorrichtung,

- Erzeugen erster ($-\underline{\dot{h}}_D$), zweiter ($-\underline{\dot{h}}_{C1}$) und dritter Steuersignale ($-\underline{\dot{h}}_{C2}$) in der Signalverarbeitungs- und Steuervorrichtung, wobei die Summe dieser Signale als Drehmomentbefehlsvektor ($-\dot{\underline{h}}$) für den Rädersatz verwendet wird,

- für die Erzeugung des ersten Steuersignals ($-\dot{\underline{h}}_\mathrm{D}$)

- das Ausgehen von der Euler-Gleichung (2.10), welche die Raumfahrzeugdynamik beschreibt,

- das Umwandeln (2.11 - 2.20) der Euler-Gleichung durch Einführen der meßbaren Teile $\underline{\omega}_M$ und $\dot{\underline{\omega}}_{CM}$ des Winkelgeschwindigkeitsvektors des Raumfahrzeugs $\underline{\omega}$ und seiner Ableitung $\dot{\underline{\omega}}$, wie sie jeweils von $\underline{\varphi}_M \equiv [\phi\ \Theta\ 0]^T$ abgeleitet sind, wobei der meßbare Teil eines Eulerschen Winkelvektors $\varphi \equiv [\phi\ \Theta\ \psi]^T$ die Abweichung (siehe Seite 11, Kapitel 2.3) des Raumfahrzeugs von seiner Bezugslage darstellt, und

- das Bestimmen des ersten Steuersignals ($-\dot{\underline{h}}_D$) als ein Teil des Drehmomentbefehlsvektors ($-\dot{\underline{h}}=T_{CH}$), welcher in der Euler-Gleichung auftritt und insofern mit dem Rädersatz in Bezug steht, daß das erste Steuersignal alle relevanten Terme in der Euler-Gleichung, welche mittels der Sensormittel meßbar sind, ausgenommen den Term $I\ddot{\underline{\varphi}}$ (Gleichungen 3.3), kompensiert, wobei I die Trägheitsmomentmatrix des Raumfahrzeugs ist, um die Raumfahrzeugachse zu entkoppeln und um eine Pseudomessung der Euler-Winkelableitung $\dot{\psi}$ sicherzustellen,

- das Bestimmen der Summe der zweiten ($-\dot{\underline{h}}_{C1}$) und dritten Steuersignale ($-\dot{\underline{h}}_{C2}$) als der andere Teil des Drehmomentbefehlsvektors,

- wobei das zweite Steuersignal ($-\dot{\underline{h}}_{C1}$) mittels eines PID oder PD Steuergesetzes, welches die meßbaren Bestandteile $\phi$, $\Theta$ von Vektor $\underline{\varphi}$ als Steuereingabe verwendet, erzeugt wird und

- das dritte Steuersignal ($-\dot{\underline{h}}_{C2}$) mittels eines D Steuergesetzes, welches die Pseudomessungsableitung $\dot{\psi}$ als Kontrollereingabe verwendet, oder eines PD Steuergesetzes, welches das berechnete $\psi$ als Eingabe für ein zeitveränderliches Beobachtungsmittel und die geschätzten Beobachtungsmittelzustandsvariablen als Kontrollereingabe verwendet, erzeugt wird.

2. Verfahren zur Lageregelung eines dreiachsenstabilisierten, erdorientierten trägheitsmomentstabilisierten Raumfahrzeugs nach Anspruch 1, dadurch gekennzeichnet, daß

- das erste Steuersignal als der relevante Teil einer Summe von Termen, die vorher aus einer Umwandlung der Euler-Gleichung, welche die Raumfahrzeugdynamik beschreibt, gewonnen worden sind, bestimmt worden ist, wobei die Umwandlung

das Ersetzen der Vektoren $\underline{\omega}$ und $\dot{\underline{\omega}}$ umfaßt, die die Winkelgeschwindigkeit des Raumfahrzeugs und ihre Ableitung nach der Zeit darstellen, durch die Vektorsummen $(\underline{\omega}_M+\Delta_{\underline{\omega}})$ und

$$\left(\dot{\underline{\omega}}_{CM} + \Delta\dot{\underline{\omega}}\right)$$

, wobei diese Vektorsummen die Teile $\underline{\omega}_M$ und $\dot{\underline{\omega}}_M$, die bestimmbar sind, wenn ihre Abhängigkeit von einem Zweiachsenmeßvektor $\underline{\varphi}_M \equiv [\phi\ \Theta\ 0]^T$, welcher der meßbare Teil eines Vektors $\underline{\varphi} \equiv [\phi\ \Theta\ \psi]^T$ ist, der die Abweichung des Raumfahrzeugs von seiner Bezugslage darstellt, von der Umlaufbahnwinkelgeschwindigkeit $\omega_o$ und von den zeitveränderlichen Bezugssignalen berücksichtigt wird, und die Teile $\Delta\underline{\omega}$ und $\Delta\dot{\underline{\omega}}$, die aufgrund der fehlenden Information über das Gieren ($\psi$) nicht bestimmbar sind, umfassen,

wobei die Summe der Terme alle Terme der umgewandelten Euler-Gleichung, welche in Anbetracht ihrer Abhängigkeit, wie oben beschrieben, bestimmbar sind, mit Ausnahme des Terms $I\ddot{\underline{\varphi}}$ umfaßt, wobei I die Trägheitsmomentmatrix des Raumfahrzeugs ist.

3. Vorrichtung zur Lageregelung eines dreiachsenstabilisierten, erdorientierten trägheitsmomentstabilisierten Raumfahrzeugs, welches auf seiner Umlaufbahn damit ausgerüstet ist, wobei die Vorrichnung zeitabhängige Lagebezugssignale mit Bezug auf ein auf die Erde ausgerichtetes Umlaufbahnbezugskoordinatensystem verwendet und Sensormittel für zweiachsige Lagemessung und einen Rädersatz zum Aufbauen eines Winkelmoments in jede gewünschte Richtung und zum Herstellen von Drehmomenten ($T_{CW}$) um die drei Achsen eines raumfahrzeugbezogenen orthogonalen Koordinatensystems aufweist, wobei die Vorrichtung

- eine Signalverarbeitungs- und Steuervorrichtung umfaßt, welche die zeitveränderlichen Lagebezugssignale, die Messungssignale der Sensormittel und die Signale ($\underline{h}$), welche den Winkelmomentvektor des Rädersatzes darstellen, aufweist,

- wobei die Signalverarbeitungs- und Steuervorrichtung erste ($-\underline{\dot{h}}_D$), zweite ($-\underline{\dot{h}}_{C1}$) und dritte Steuersignale ($-\underline{\dot{h}}_{C2}$) erzeugt, wobei die Summe dieser Signale als Drehmomentbefehlsvektor ($-\underline{\dot{h}}$) für den Rädersatz verwendet wird,

- wobei die Erzeugung des ersten Steuersignals ($-\underline{\dot{h}}_D$) erreicht wird durch

- das Umwandeln (2.11 - 2.20) der Euler-Gleichung durch Einführen der meßbaren Teile $\underline{\omega}_M$ und $\underline{\dot{\omega}}_{CM}$ des Winkelgeschwindigkeitsvektors des Raumfahrzeugs $\underline{\omega}$ und seiner Ableitung $\underline{\dot{\omega}}$, wie sie jeweils von $\underline{\varphi}_M \equiv [\phi\ \Theta\ 0]^T$ abgeleitet sind, wobei der meßbare Teil eines Eulerschen Winkelvektors $\varphi \equiv [\phi\ \Theta\ \psi]^T$ die Abweichung (siehe Seite 11, Kapitel 2.3) des Raumfahrzeugs von seiner Bezugslage, und

- das Bestimmen des ersten Steuersignals ($-\underline{\dot{h}}_D$) als einen Teil des Drehmomentbefehlsvektors ($-\underline{\dot{h}}=T_{CH}$), welcher in der Euler-Gleichung auftritt und insofern mit dem Rädersatz in Bezug steht, daß das erste Steuersignal alle relevanten Terme in der Euler-Gleichung, welche mittels der Sensormittel meßbar sind, ausgenommen den Term $I\ddot{\varphi}$ (Gleichungen 3.3), kompensiert, wobei I die Trägheitsmomentmatrix des Raumfahrzeugs ist, um die Raumfahrzeugachse zu entkoppeln und um eine Pseudomessung der Euler-Winkelableitung $\dot{\psi}$ sicherzustellen,

- wobei die Summe der zweiten ($-\underline{\dot{h}}_{C1}$) und dritten Steuersignale ($-\underline{\dot{h}}_{C2}$) den anderen Teil des Drehmomentbefehlsvektors bildet,

- wobei das zweite Steuersignal ($-\underline{\dot{h}}_{C1}$) mittels eines PID oder PD Steuergesetzes, welches die meßbaren Bestandteile $\phi$, $\Theta$ von Vektor $\underline{\varphi}$ als Steuereingabe verwendet, erzeugt wird und

- das dritte Steuersignal ($-\underline{\dot{h}}_{C2}$) mittels eines D Steuergesetzes, welches die Pseudomessungsableitung $\dot{\psi}$ als Kontrollereingabe verwendet, oder eines PD Steuergesetzes, welches das berechnete $\dot{\psi}$ als Eingabe für ein zeitveränderliches Beobachtungsmittel und die geschätzten Beobachtungsmittelzustandsvariablen als Kontrollereingabe verwendet, erzeugt wird.


**Revendications**

1. Procédé de commande de l'attitude d'un engin spatial à quantité de mouvement de sollicitation orienté par rapport à la terre, stabilisé sur trois axes qui reçoit sur son orbite des signaux de référence d'attitude variables dans le temps par rapport à un système de coordonnées de référence orbital de pointage terrestre et comportant des moyens de capteurs pour la mesure d'attitude sur deux axes et un ensemble de roues pour établir un moment cinétique dans une direction désirée quelconque et pour produire des couples ($T_{CW}$) autour des trois axes d'un système de coordonnées orthogonales lié à l'engin spatial, le procédé comprenant

- appliquer à un dispositif de traitement et de commande du signal lesdits signaux de référence d'attitude variables dans le temps, des signaux de mesure provenant desdits moyens de capteurs et des signaux ($\underline{h}$) représentant le vecteur de moment cinétique dudit ensemble de roues,
- dans ledit dispositif de traitement et de commande du signal, générer des premier ($-\underline{\dot{h}}_D$), second ($-\underline{\dot{h}}_{C1}$) et troisième signaux de commande ($-\underline{\dot{h}}_{C2}$), dont la somme est utilisée en tant que vecteur d'ordre de couple ($-\underline{\dot{h}}$) pour ledit ensemble de roues,

  - pour la génération dudit premier signal de commande ($-\underline{\dot{h}}_D$)
  - partir de l'équation d'Euler (2.10) décrivant les éléments dynamiques de l'engin spatial,
  - transformer (2.11-2.20) l'équation d'Euler en introduisant les parties mesurables $\underline{\omega}_M$ et $\underline{\dot{\omega}}_{CM}$ du vecteur de vitesse angulaire de l'engin spatial $\underline{\omega}$ et de sa dérivée $\underline{\dot{\omega}}$, respectivement telles qu'elles sont obtenues à partir de $\underline{\varphi}_M \equiv [\phi\ \theta\ 0]^T$, la partie mesurable d'un vecteur d'angles d'Euler $\varphi \equiv [\phi\ \theta\ \psi]^T$ représentant l'écart (page 8, chapitre 2.3) de l'engin spatial par rapport à son attitude de référence, et

- déterminer ledit premier signal de commande ($-\dot{\underline{h}}_D$) en tant qu'une partie du vecteur d'ordre de couple ($-\dot{\underline{h}} = T_{CH}$) figurant dans l'équation de l'Euler et qui est lié audit ensemble de roues de telle manière que ledit premier signal de commande compense tous les termes concernés dans l'équation d'Euler qui sont mesurables au moyen desdits moyens de capteurs à l'exception du terme $I\ddot{\varphi}$ (équations 3.3), dans lequel I est la matrice d'inertie de l'engin spatial, de manière à découpler l'axe de l'engin spatial et d'assurer une pseudo-mesure de la dérivée d'angles d'Euler $\dot{\psi}$.

- déterminer la somme desdits second ($-\dot{\underline{h}}_{C1}$) et troisième signaux de commande ($-\dot{\underline{h}}_{C2}$) en tant que l'autre dudit vecteur d'ordre de couple,
- ledit second signal de commande ($-\dot{\underline{h}}_{C1}$) étant généré au moyen d'une loi de commande par action proportionnelle, intégrale et dérivée (PID) ou proportionnelle et dérivée (PD) en utilisant les composantes mesurables $\phi$, $\theta$ du vecteur $\underline{\varphi}$ en tant qu'entrée de commande, et
- ledit troisième signal de commande ($-\dot{\underline{h}}_{C2}$) étant généré au moyen soit d'une loi de commande par action dérivée (D) en utilisant la dérivée de ladite pseudo-mesure $\dot{\psi}$ en tant qu'entrée du contrôleur ou une loi de commande par action proportionnelle et dérivée (PD) en utilisant $\psi$ calculée en tant qu'entrée pour un observateur variable dans le temps et les variables d'état estimées de l'observateur en tant qu'entrées du contrôleur.

**2.** Procédé de commande de l'attitude d'un engin spatial à quantité de mouvement de sollicitation orienté par rapport à la terre, stabilisé sur trois axes selon la revendication 1, caractérisé en ce que

- ledit premier signal de commande est déterminé en tant que partie concernée d'une somme de termes qui peut être obtenue au préalable à partir d'une transformation de l'équation d'Euler qui décrit les éléments dynamiques de l'engin spatial, la transformation consistant à

  remplacer les vecteurs $\underline{\omega}$ et $\dot{\underline{\omega}}$ représentant la vitesse angulaire de l'engin spatial et sa dérivée par rapport au temps, respectivement, par des sommes vectorielles ($\underline{\omega}_M + \Delta\underline{\omega}$) et ($\dot{\underline{\omega}}_{CM} + \Delta\dot{\underline{\omega}}$), respectivement, ces sommes vectorielles contenant des parties $\underline{\omega}_M$ et $\dot{\underline{\omega}}_M$ qui peuvent être déterminées en prenant en compte leur dépendance vis-à-vis d'un vecteur de mesure sur deux axes $\underline{\varphi}_M \equiv [\phi\ \theta\ 0]^T$ qui constitue la partie mesurable d'un vecteur $\underline{\varphi} \equiv [\phi\ \theta\ \psi]^T$ représentant l'écart de l'engin spatial par rapport à son attitude de référence, vis-à-vis de la vitesse angulaire orbitale $\omega_0$ et vis-à-vis desdits signaux de référence variables dans le temps, et des parties $\Delta\underline{\omega}$ et $\Delta\dot{\underline{\omega}}$ qui ne peuvent pas être déterminées en raison du manque d'informations en lacet ($\psi$),
  ladite somme de termes comprenant tous les termes de l'équation d'Euler transformée qui peuvent être déterminés au vu de leur dépendance telle qu'elle est caractérisée ci-dessus, à l'exception du terme $I\ddot{\varphi}$,
  I étant la matrice d'inertie de l'engin spatial.

**3.** Dispositif destiné à commander l'attitude d'un engin spatial à quantité de mouvement de sollicitation orienté par rapport à la terre, stabilisé sur trois axes qui reçoit sur son orbite des signaux de référence d'attitude variables dans le temps par rapport à un système de coordonnées de référence orbital de pointage terrestre et comportant des moyens de capteurs pour la mesure d'attitude sur deux axes et un ensemble de roues destiné à établir un moment cinétique dans toute direction désirée quelconque et destiné à produire des couples ($T_{CW}$) autour des trois axes d'un système de coordonnées orthogonales lié à l'engin spatial, le dispositif comprenant

- un dispositif de traitement et de commande du signal recevant lesdits signaux de référence d'attitude variables dans le temps, les signaux de mesure provenant desdits moyens de capteurs et les signaux ($\underline{h}$) représentant le vecteur de moment cinétique dudit ensemble de roues, en tant que signaux d'entrée,
- ledit dispositif de traitement et de commande du signal générant des premier ($-\dot{\underline{h}}_D$), second ($-\dot{\underline{h}}_{C1}$) et troisième signaux de commande ($-\dot{\underline{h}}_{C2}$), dont la somme est utilisée en tant que vecteur d'ordre de couple ($-\dot{\underline{h}}$) pour ledit ensemble de roues,
- dans lequel la génération dudit premier signal de commande ($-\dot{\underline{h}}_D$) est obtenue par

  - la transformation (2.11-2.20) de l'équation d'Euler en introduisant les parties mesurables $\underline{\omega}_M$ et $\dot{\underline{\omega}}_{CM}$ du vecteur de vitesse angulaire de l'engin spatial $\underline{\omega}$ et de sa dérivée $\dot{\underline{\omega}}$, respectivement, telles qu'elles sont obtenues à partir de $\underline{\varphi}_M \equiv [\phi\ \theta\ 0]^T$, la partie mesurable d'un vecteur d'angles d'Euler $\varphi \equiv [\phi\ \theta\ \psi]^T$ représentant l'écart (page 8, chapitre 2.3) de l'engin spatial par rapport à son attitude de référence, et
  - la détermination dudit premier signal de commande ($-\dot{\underline{h}}_D$) en tant qu'une partie du vecteur d'ordre de couple ($-\dot{\underline{h}} = T_{CH}$) figurant dans l'équation de l'Euler et qui est associé audit ensemble de roues de telle manière que ledit premier signal de commande compense tous les termes concernés dans l'équation d'Euler qui sont mesurables au moyen desdits moyens de capteurs à l'exception du terme $I\ddot{\underline{\varphi}}$ (équations 3.3), dans lequel I est la matrice d'inertie de l'engin spatial, de manière à découpler l'axe de l'engin spatial et à assurer une pseudo-mesure de la dérivée d'angles d'Euler $\dot{\psi}$ .

- dans lequel la somme desdits second ($-\dot{\underline{h}}_{C1}$) et troisième signaux de commande ($-\dot{\underline{h}}_{C2}$) forme l'autre partie dudit vecteur d'ordre de couple,

- ledit second signal de commande ($-\dot{\underline{h}}_{C1}$) étant généré au moyen d'une loi de commande par action proportionnelle, intégrale et dérivée (PID) ou proportionnelle et dérivée (PD) utilisant les composantes mesurables $\phi$, $\theta$ du vecteur $\underline{\varphi}$ en tant qu'entrée de commande, et

- ledit troisième signal de commande ($-\dot{\underline{h}}_{C2}$) étant généré au moyen soit d'une loi de commande par action dérivée (D) en utilisant ladite dérivée de pseudo-mesure $\dot{\psi}$ en tant qu'entrée du contrôleur ou bien une loi de commande par action proportionnelle et dérivée (PD) en utilisant $\dot{\psi}$ calculée en tant qu'entrée pour un observateur variable dans le temps et les variables d'état estimées de l'observateur en tant qu'entrées du contrôleur.

Figure 1: Orbit and reference coordinate systems.

Fig. 4.1: Roll reference and controlled roll attitude.

Fig. 4.2: Roll, pitch and yaw errors.

Fig. 4.3: Resulting angular momentum of wheels.

Fig. 4.4: Yaw-transient behaviour of a GEO satellite.

Fig. 4.5

**Fig. 4.6** Time-Variant Yaw Observer

$$\hat{\underline{x}} = \begin{bmatrix} \hat{\psi} \\ \hat{\dot{\psi}} \end{bmatrix}$$

$$u = -\begin{bmatrix} K_{P_z} & K_{D_z} \end{bmatrix} \cdot \hat{\underline{x}} \qquad\qquad c_m^T = \begin{bmatrix} 0 & 1 \end{bmatrix}$$

$$\underline{b} = \begin{bmatrix} 0 \\ \dfrac{1}{I_z} \end{bmatrix} \qquad A(t) = \begin{bmatrix} 0 & 1 \\ -d_z(t) & 0 \end{bmatrix} \qquad g(t) = \begin{bmatrix} g_1(t) \\ g_2(t) \end{bmatrix}$$

EP 0 790 542 B1